(19) **Europäisches Patentamt / European Patent Office / Office européen des brevets**

(11) **EP 3 226 406 B1**

(12) **EUROPEAN PATENT SPECIFICATION**

(45) Date of publication and mention of the grant of the patent:
**04.05.2022 Bulletin 2022/18**

(21) Application number: **14907174.8**

(22) Date of filing: **28.11.2014**

(51) International Patent Classification (IPC):
**H02P 23/00** (2016.01)     **H02P 21/18** (2016.01)
**H02P 21/16** (2016.01)

(52) Cooperative Patent Classification (CPC):
**H02P 23/00; H02P 21/16; H02P 21/18;**
H02P 2203/09

(86) International application number:
**PCT/JP2014/081489**

(87) International publication number:
**WO 2016/084213 (02.06.2016 Gazette 2016/22)**

(54) **MONITORING DEVICE AND MONITORING METHOD, AND CONTROL DEVICE AND CONTROL METHOD PROVIDED WITH SAME**

ÜBERWACHUNGSVORRICHTUNG UND ÜBERWACHUNGSVERFAHREN SOWIE STEUERUNGSVORRICHTUNG UND STEUERUNGSVERFAHREN DAMIT

DISPOSITIF DE SURVEILLANCE ET PROCÉDÉ DE SURVEILLANCE, ET DISPOSITIF DE COMMANDE ET PROCÉDÉ DE COMMANDE LES UTILISANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**04.10.2017 Bulletin 2017/40**

(73) Proprietor: **Hitachi Industrial Equipment Systems Co., Ltd.**
**Tokyo 101-0022 (JP)**

(72) Inventor: **ARAO Yusuke**
**Tokyo 101-0022 (JP)**

(74) Representative: **Strehl Schübel-Hopf & Partner**
**Maximilianstrasse 54**
**80538 München (DE)**

(56) References cited:
**EP-A1- 1 835 612     EP-A1- 2 112 753**
**JP-A- 2007 244 174     JP-A- 2008 043 126**
**JP-A- 2010 233 320     JP-A- 2012 157 155**
**JP-A- 2012 157 155     US-A1- 2003 065 634**

• **None**

**Description**

TECHNICAL FIELD

The present invention relates to a monitoring device and a monitoring method, and a control device and a control method provided with the same.

BACKGROUND ART

Japanese Patent No. 3815113 (Patent Literature 1) is provided as a background art of the present technical field.

This publication describes "An induction motor control method for driving an induction motor by a power converter and a speed control device for controlling an output frequency value and an output voltage value of the converter according to a speed command value, characterized by comprising adding the speed command value with a slip frequency estimation value calculated by using an output voltage command value of the converter and a slip frequency calculation value calculated by using an output current value of the converter, and controlling an output frequency of the converter according to the additional value."

CITATION LIST

PATENT LITERATURE

PATENT LITERATURE 1: Japanese Patent No. 3815113

SUMMARY OF INVENTION

TECHNICAL PROBLEM

In order to comply with functional safety standards, a power conversion device has been recently required to be provided with a safety unit and enhance the safety of a control system for an AC motor. In order to satisfy this requirement, it has been required to accurately estimate the actual speed of the AC motor.

Patent Literature 1 presents a method of controlling the output frequency of a power converter in speed sensorless vector control for an induction motor.

In the method described in Patent Literature 1, the speed of the induction motor is controlled to be coincident with a speed command value, so that the speed command value corresponds to an estimation value of the actual speed. However, a calculation method of estimating the speed needs a motor constant which is not described on the nameplate of the motor. Therefore, this method has a problem that it needs troublesome works such as inquiry to the maker of the motor and acquisition of motor constant data by auto-tuning of the motor.

Furthermore, in the power conversion device using the control method described in Patent Literature 1, various constant values containing the motor constant are set by auto-tuning or an operator, and the speed command value is calculated by using the various constant values. The speed command value is set as an estimation value of the actual speed of the AC motor. Therefore, even when these various constant values could not be set to proper values because of malfunction of auto-tuning or the like, the operation on a control system of the speed sensorless vector control is performed based on a speed command value calculated with various constant values set by auto-tuning, and the speed command value is set as an estimation value of the actual speed of the AC motor. Therefore, it is recognized that the AC motor is operated within a normal speed range. That is, in the actual operation, the device falls into a state where the actual speed of the AC motor is deviating from a safe speed range under consideration because the constant values are wrong. Therefore, there is a problem that it is impossible to detect a situation where the operation speed of the AC motor is out of a predetermined range. Furthermore, the calculation using the control method as described above has a problem that the processing speed decreases because the calculation amount is large, so that the consumption amount of a memory increases. Still furthermore, the constant-V/f control of an induction motor has a problem that the speed cannot be strictly estimated because high-level vector calculation is not performed.

In some cases, there is adopted a system in which a safety unit for monitoring the power conversion device adopts a system in which the safety unit is provided as a monitoring device separately from and independent of the power conversion device and the monitoring device is caused to monitor and control the power conversion device. However, when the monitoring device is caused to perform the same processing as the power conversion device and monitor the speed, the power conversion device is caused to bear some function such as estimation of the speed. Therefore, there is a problem that the operation range of the monitoring device as the safety unit is excessively broad, and it takes time and cost to check the characteristic and estimate the actual speed. Furthermore, there is a problem that the actual speed of the AC motor cannot be accurately monitored when the AC motor is monitored by the monitoring device according to the aforementioned speed estimating method.

Therefore, in view of the aforementioned problems, the present invention has an object to provide a monitoring device and a monitoring method that can monitor the operation of an AC motor not only simply and in low cost, but also safely and accurately, and a power conversion device and a power conversion method provided with the same.

Methods for determining the rotation speed of an induction motor and for controlling the motor, which are related to the present invention, are disclosed in EP 2 112 753 A1 and US 2003/065634 A1.

EP1835612 A1 discloses a driver for an induction motor which accelerates the motor according to the load and reduces acceleration failures.

JP 2012157155 A discloses a control device for an induction motor comprising a converter, an intermediate circuit and a controlled inverter.

SOLUTION TO PROBLEM

In order to solve the problems, the present invention suggests the control device and the control method defined in the independent claims. Further advantageous features are set out in the dependent claims.

ADVANTAGEOUS EFFECTS OF INVENTION

According to the present invention, there can be provided a control device and a control method comprising, respectively, a monitoring device and a monitoring method that can monitor the operation of an AC motor not only simply and in low cost, but also with high precision.

The aforementioned problems, configurations and effects will be apparent from the description of the following embodiments.

BRIEF DESCRIPTION OF DRAWINGS

[FIG. 1] FIG. 1 is an example of a diagram showing the configuration of a control device having a power conversion device and a monitoring device according to an embodiment 1 which is not embodiment of the invention but an example useful for its understanding.

[FIG. 2] FIG. 2 is a flowchart showing the operation of the monitoring device according to the embodiment 1.

[FIG. 3(A)] FIG. 3(A) is a general characteristic diagram associated with slip and torque, and slip and primary current.

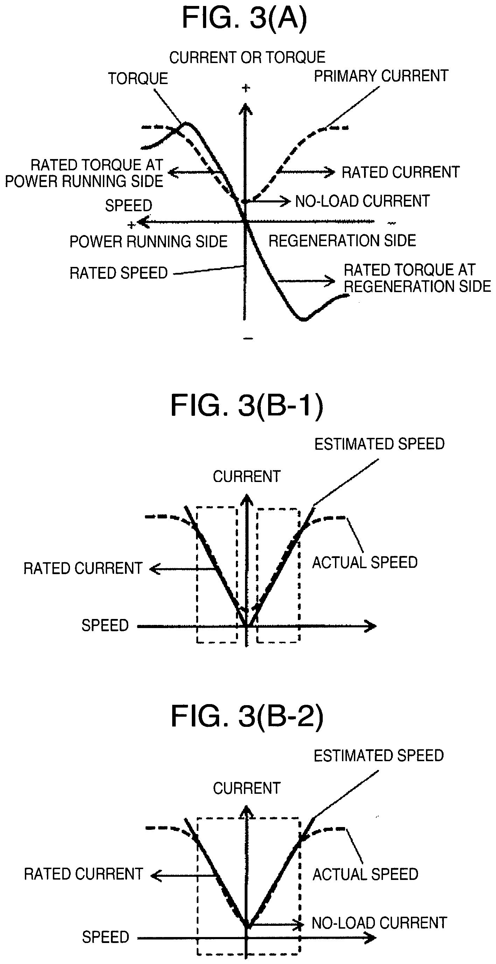

[FIG. 3(B-1)] FIG. 3(B-1) is a general characteristic diagram associated with slip and torque, and slip and primary current.

[FIG. 3(B-2)] FIG. 3(B-2) is a general characteristic diagram associated with slip and torque, and slip and primary current.

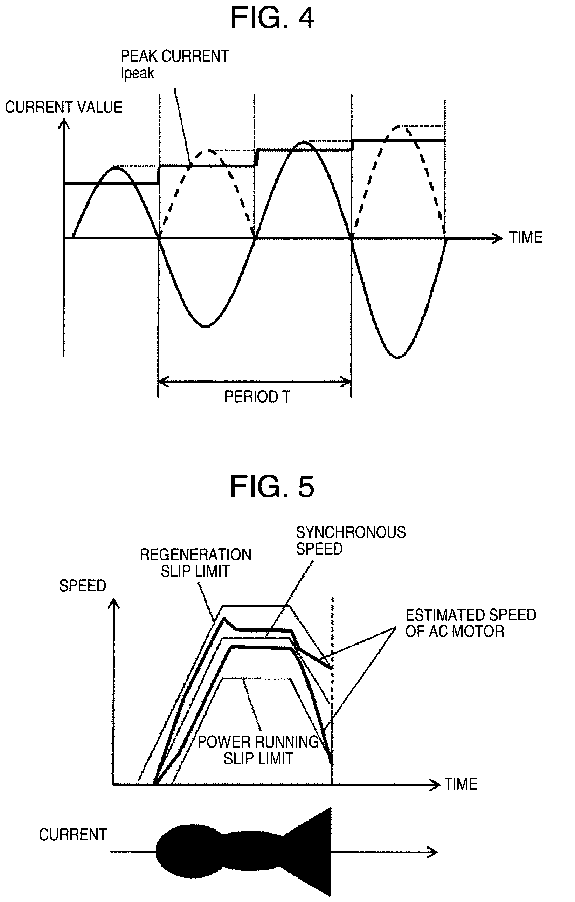

[FIG. 4] FIG. 4 is a schematic diagram showing current and period used for speed estimation in the embodiment 1.

[FIG. 5] FIG. 5 is an example of a diagram showing the variations of estimated speed, speed range and current in the embodiment 1.

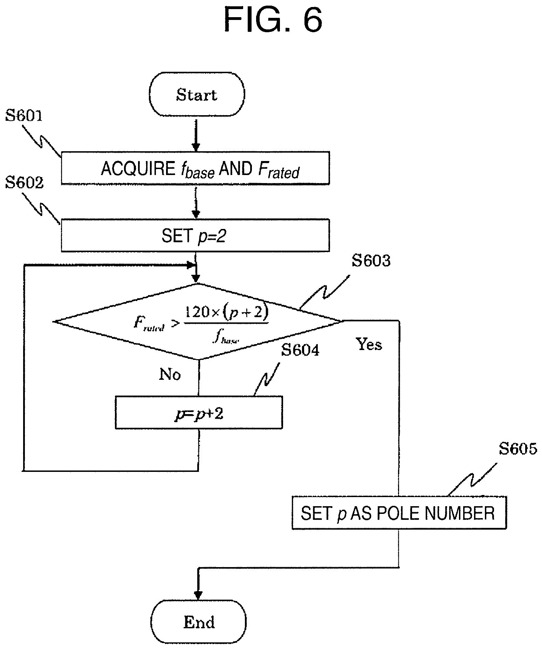

[FIG. 6] FIG. 6 is a flowchart showing the operation of estimating the number of poles in the embodiment 1.

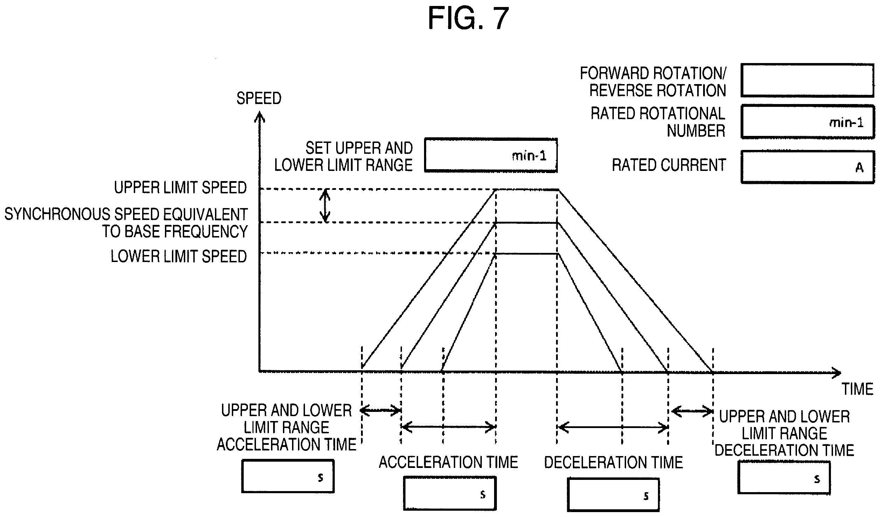

[FIG. 7] FIG. 7 shows an example of a user interface to be displayed on a computer in embodiments 1 and 2.

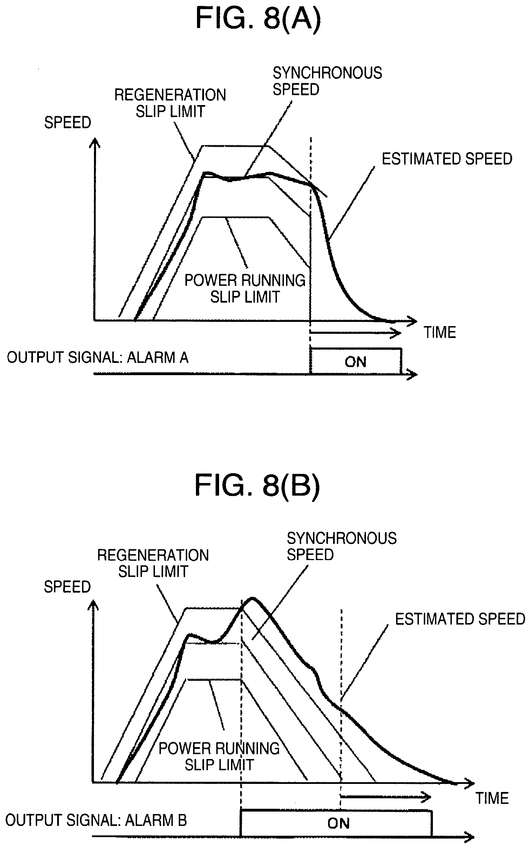

[FIG. 8(A)] FIG. 8(A) is an example of a diagram showing the actual speed of an AC motor and a signal output after detection of abnormality in the embodiment 1.

[FIG. 8(B)] FIG. 8(B) is an example of a diagram showing the actual speed of the AC motor and the signal output after detection of abnormality.

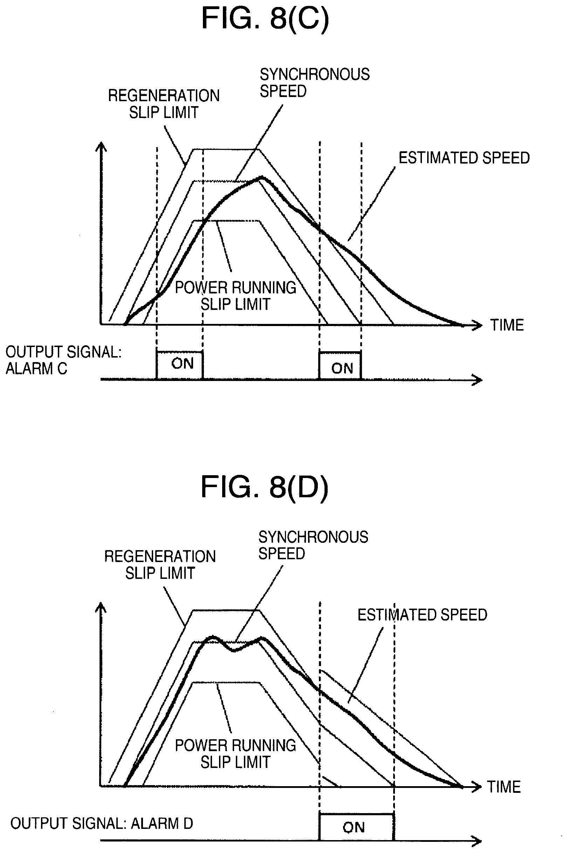

[FIG. 8(C)] FIG. 8(C) is an example of a diagram showing the actual speed of the AC motor and the signal output after detection of abnormality.

[FIG. 8(D)] FIG. 8(D) is an example of a diagram showing the actual speed of the AC motor and the signal output after detection of abnormality.

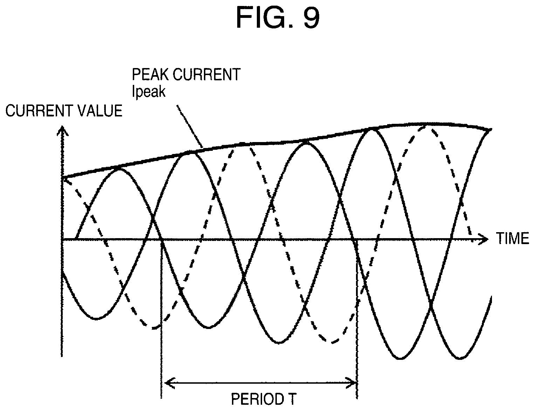

[FIG. 9] FIG. 9 is a schematic diagram showing current and period used for speed estimation in the embodiment 2 which is not embodiment of the invention but an example useful for its understanding.

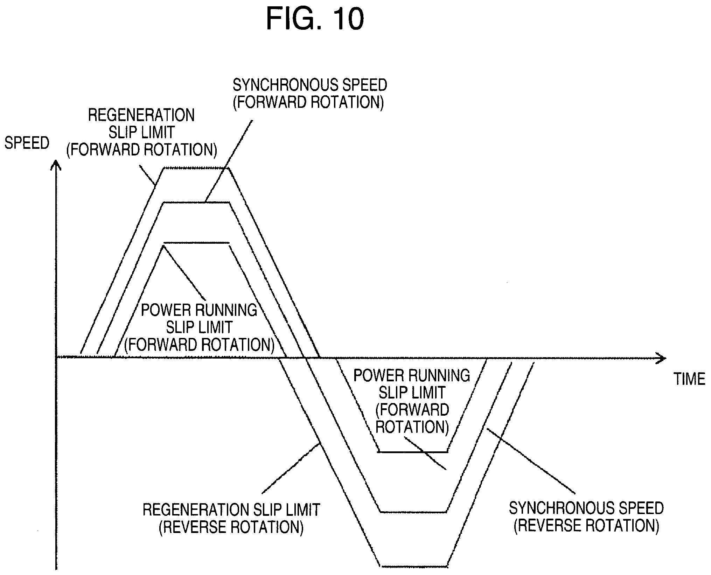

[FIG. 10] FIG. 10 is an example of a diagram showing the variations of the synchronous speed and speed range in the embodiment 2.

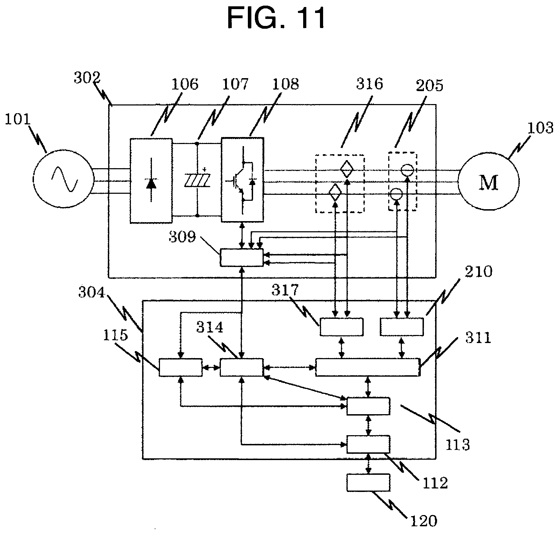

[FIG. 11] FIG. 11 is an example of a diagram showing the configuration of a control device having a power conversion device and a monitoring device in an embodiment 3 of the invention.

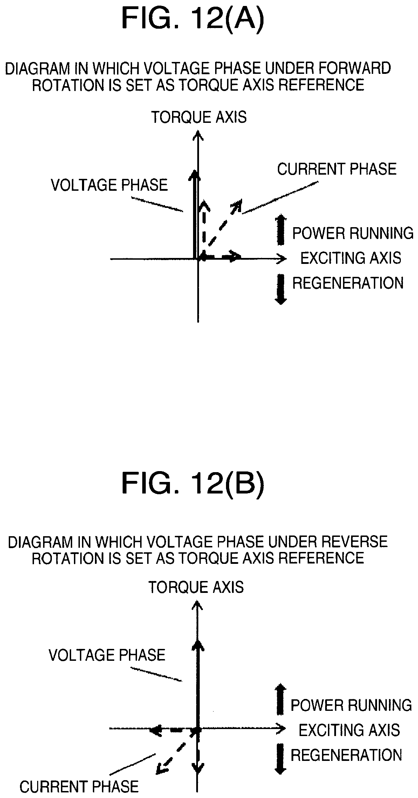

[FIG. 12(A)] FIG. 12(A) is an example of a spectrography to determine power running and regeneration in an embodiment 3.

[FIG. 12(B)] FIG. 12(B) is an example of a spectrography to determine power running and regeneration in the embodiment 3.

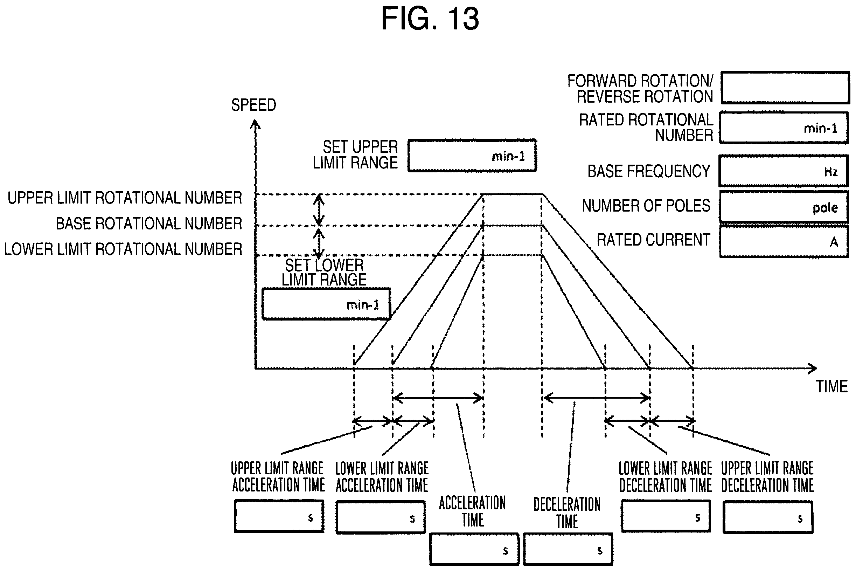

[FIG. 13] FIG. 13 shows an example of a user interface to be displayed on a computer in the embodiment 3.

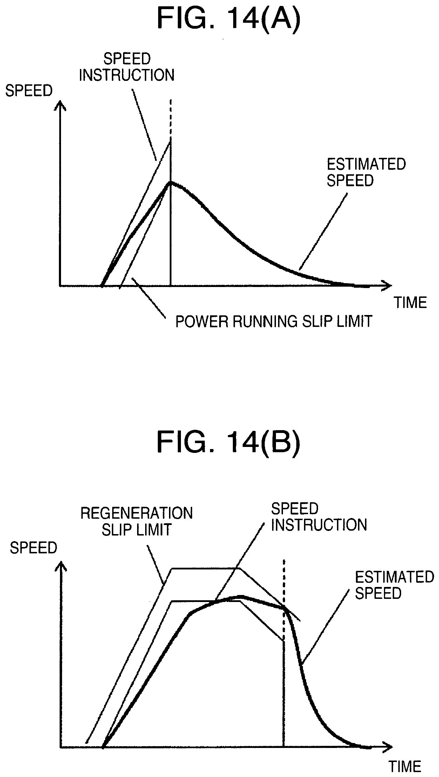

[FIG. 14(A)] FIG. 14(A) is an example of a diagram showing the actual speed of the AC motor and the signal output after detection of abnormality in the embodiment 3.

[FIG. 14(B)] FIG. 14(B) is an example of a diagram showing the actual speed of the AC motor and the signal output after detection of abnormality in the embodiment 3.

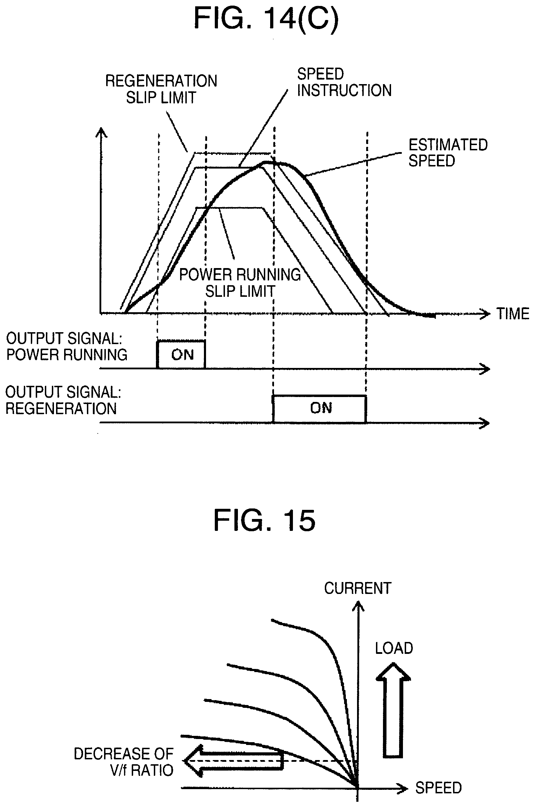

[FIG. 14(C)] FIG. 14(C) is an example of a diagram showing the actual speed of the AC motor and the signal output after detection of abnormality in the embodiment 3.

[FIG. 15] FIG. 15 is an example of a diagram showing an effect of a voltage/frequency ratio associated with the speed and current of the AC motor in the embodiment 3.

DESCRIPTION OF EMBODIMENTS

Embodiments and example useful for the understanding of the invention will be described hereunder with reference to the drawings.

Embodiment 1 (not embodiment of the invention but an example useful for its understanding)

An example of a monitoring device for monitoring whether the speed of an AC motor 103 whose operation is controlled by a power conversion device 102 deviates from a permissible speed range will be described in this embodiment.

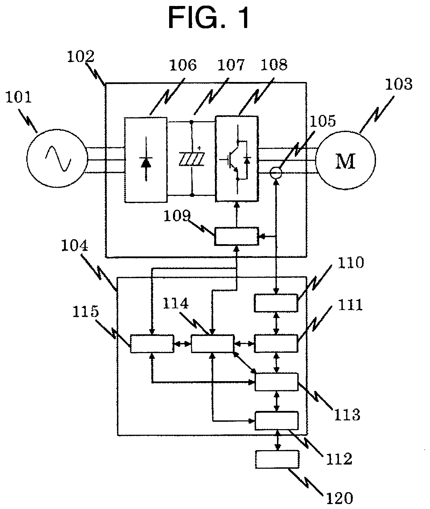

FIG. 1 is an example of a diagram showing the configuration of a control device having a power conversion device and a monitoring device according to an embodiment 1. FIG. 1 shows the power conversion device 102, a monitoring device 104, the AC motor 103 and a three-phase AC power source 101.

In this embodiment, the power conversion device 102 includes a current detector 105, a DC converter 106, a smoothing capacitor 107, an AC converter 108 and an output controller 109. Furthermore, in this embodiment, the monitoring device 104 includes a current data creator 110, a speed computation unit 111, an I/O unit 112, a storage unit 113, an abnormality determination unit 114 and an operation instruction unit 115.

First, the operation of the power conversion device 102 will be described.

The three-phase AC power source 101 is, for example, a three-phase AC voltage supplied from an electric power company, or an AC voltage supplied from a power generator, and is output to the DC converter 106.

The DC converter 106 includes, for example, a DC conversion circuit comprising a diode(s), or a DC conversion circuit using IGBT (Insulated Gate Bipolar Transistor) and a fly wheel diode, and it converts an AC voltage input from the three-phase AC power source 101 to a DC voltage, and outputs the DC voltage to the smoothing capacitor 107. A DC converter comprising a diode(s) is shown in FIG. 1.

The smoothing capacitor 107 constitutes an intermediate circuit, smooths the DC voltage input from the DC converter 106, and outputs the DC voltage to the AC converter 108. For example, when the output of the power generator is a DC voltage, the DC voltage from the power generator may be directly input to the smoothing capacitor 107 without passing through the DC converter 106.

The AC converter 108 comprises, for example, an AC conversion circuit using IGBT and a fly wheel diode, receives the DC voltage of the smoothing capacitor 107, converts the DC voltage to an AC voltage based on a PWM output waveform input from the output controller 109, and outputs the AC voltage to the AC motor 103.

The current detector 105 comprises, for example, a hall CT or a shunt resistor, detects output current flowing between the AC converter 108 and the AC motor 103, and outputs the output current to the output controller 109 and the current data creator 110 of the monitoring device 104.

The output controller 109 comprises, for example, MCU (microprocessor), IC or a drive circuit, and under normal operation, the AC converter is controlled according to an instruction based on the control system such as the sensorless vector control or the V/f control by using the output current detected in the current detector 105, thereby controlling the operation of the AC motor 103. When receiving an operation instruction from the operation instruction unit 115 of the monitoring device 104, the output controller 109 preferentially performs the instructed operation. The output controller 109 outputs information being used in the power conversion device 102 to the monitoring device 104.

Next, the operation of the monitoring device 104 will be described. The monitoring device 104 is a monitoring device for controlling the AC motor (the behaviors of the power conversion device 102 and the AC motor 103) as a safety unit independently of the control system in which the power conversion device 102 controls the AC motor 103. Accordingly, for example even when abnormality occurs in the operation speed of the AC motor 103 based on the control system of the power conversion device 102 because a constant value such as a motor constant is erroneously set, or even when the power conversion device 102 cannot normally control built-in circuits due to hard error or soft error, the operation of the AC motor 103 is monitored independently of the control system of the power conversion device 102. Therefore, the safety of the power conversion device 102 can be enhanced. Insofar as the monitoring device 104 can independently monitor as a safety unit, the function of the monitoring device 104 or the monitoring device 104 may be incorporated in the power conversion device.

The current data creator 110 receives the output current of the power conversion device 102 which is detected by the current detector 105 of the power conversion device 102, multiplies, for example, the input current value by a circuit gain to convert to one-phase current data, and outputs the current data to the speed computation unit 111.

The speed computation unit 111 receives the one-phase current data from the current data creator 110, and a base frequency, a rated rotational speed (rated frequency) or a rated slip speed (rated slip frequency), the number of poles, rated current and rated voltage which are preset and supplied from a storage unit 113; acquires an estimated speed as the actual speed of the AC motor from a synchronous rotational speed (synchronous frequency or power supply frequency) which is equivalent to the base frequency and acquired by using the base frequency and the number of poles, the rated rotational speed (rated frequency) or the rated slip speed (rated slip frequency), and the period of the acquired current data and the peak current value of each period; and outputs the estimated speed to the abnormality determination unit 114.

The I/O unit 112 has a connection part to be connected to an external device 120 such as a computer, receives limited information written on the nameplate of the AC motor such as the base frequency, the rated rotational speed (rated frequency) or the rated slip speed (rated slip frequency), the rated current, and the number of poles which are preset on a computer, and various data such as an acceleration time and a deceleration time suitable for the control system, a permissible speed range, and the output time of a reference signal, and outputs them to the storage unit 113. The I/O unit 112 has, for example, an output terminal unit for supplying a signal to the outside, receives abnormality determination information of the abnormality determination unit 114 and outputs a signal to the external device 120 connected thereto. Furthermore, the I/O unit 112 has, for example, an input terminal unit for receiving a signal from the external, and for example when a signal for instructing deceleration is input to the input terminal unit, the I/O unit 112 outputs an AC motor decelerating instruction to the operation instruction unit 115.

The storage unit 113 comprises, for example, a magnetic disc, an optical disc, a flash memory or EEPROM, and receives and stores various data from the I/O unit 112, for example. Furthermore, the storage unit 113 receives a data acquisition request from the speed computation unit 111, the abnormality determination unit 114 or the operation instruction unit 115, and outputs the data corresponding to the acquisition request to each request source. The storage unit 113 may be allowed to receive various data from a display unit (not shown) or receive various data through the I/O unit 112 from a display unit of the power conversion device (not shown).

The abnormality determination unit 114 receives the data such as the estimated speed input from the speed computation unit 111, and the preset acceleration time, deceleration time and permissible speed range input from the storage unit 113, determines based on the input data whether the estimated speed is within the set permissible speed range, and outputs a determination result as to abnormality or non-abnormality to the operation instruction unit 115. Furthermore, the abnormality determination unit 114 receives, for example, an abnormality determination signal which is input from the I/O unit 112 to set the function of the monitoring device 104 to ON, or abnormality determination setting which indicates execution of abnormality determination and is stored in the storage unit 113, thereby determining whether abnormality determination is executed or not. The determination as to whether abnormality determination is executed or not may be performed, for example, by using an ON/OFF switch (not shown) provided to the monitoring device 104 or means such as ON/OFF setting from an external PC through the I/O unit 112, and the abnormality determination may be executed when the switch or the means is set to ON-state.

The operation instruction unit 115 receives the determination result of the abnormality determination unit 114 and operation setting under abnormality which is preset in the storage unit 113 and, for examples, stops the operation of the power conversion device 102. When the determination result indicates abnormality of speed, the operation instruction unit 115 outputs an under-abnormality operation instruction to the output controller 109 of the power conversion device 102. The under-abnormality operation instruction may contain, for example, a signal for stopping the operation of the AC motor or a signal for decelerating the AC motor.

Next, a method of determining abnormality of speed by the monitoring device 104 will be described.

Before starting stationary processing, the abnormality determination unit 114 fetches the speed range stored in the storage unit 113, for example, immediately after power-up. For example, before the power conversion device starts to operate, parameters which are matched with the control system are set in an example of the speed range which is displayed on the computer and shown in FIG. 7, and stored in advance in the storage unit 113. For example, by setting the speed range within a range under a rated load, abnormality of speed can be efficiently determined, and the speed range is approximately in a range from 80 to 120% of the synchronous speed. However, the preset speed range is not limited to the speed range described above, and may be appropriately determined according to the rated slip speed or operating environment of the AC motor.

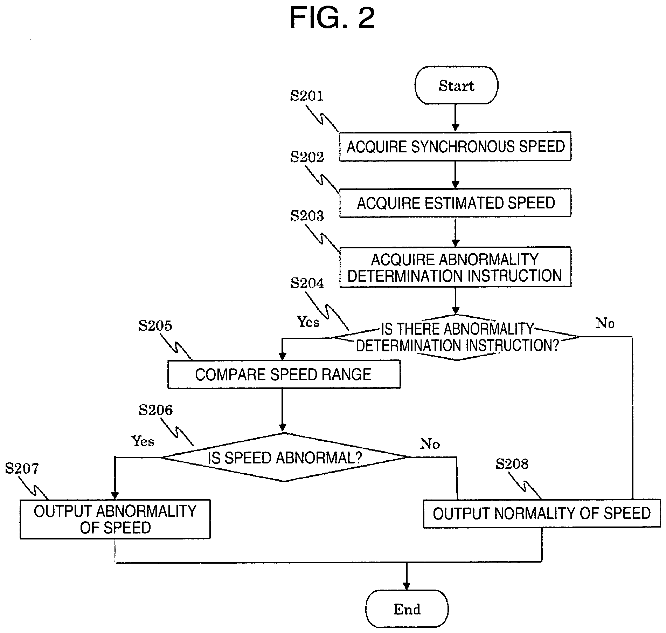

FIG. 2 is a flowchart showing the operation of the monitoring device according to the embodiment 1. When starting the stationary processing, the abnormality determination unit 114 acquires the synchronous speed of the output current from the speed computation unit 111 (S201). The synchronous speed may acquire the frequency instructed by the power conversion device 102. The abnormality determination unit 114 acquires the estimated speed from the speed computation unit 111 (S202). Subsequently, the abnormality determination unit 114 acquires an abnormality determination signal which is input from the I/O unit 112 and indicates whether the monitoring function is operated or not, or abnormality determination setting which is stored in the storage unit 113 and indicates whether the monitoring function is operated or not (S203), and instructs an abnormality determination (S204). As an example of the abnormality determination signal may be used an ON/OFF safety switch which is connected to the I/O unit 112 and sets whether the monitoring function of the monitoring device 104 should be operated or not or the like. When the monitoring function of the monitoring device 104 is set to deceleration monitoring from the computer connected to the I/O unit 112 in advance, a safety switch is provided to, for example, a door installed for maintenance of facilities. When the door is opened, the safety switch is turned on, and the monitoring device 104 monitors that the power conversion device 102 decelerates and stops interlockingly with the signal. Alternatively, when the monitoring function of the monitoring device 104 is set to low-speed monitoring from the computer connected to the I/O unit 112 in advance, for example when it is required to perform maintenance while the operation is performed in conveyor facilities, the safety switch is provided and turned on when maintenance is performed, and interlockingly with a signal of the safety switch, the monitoring device 104 monitors the operation of the power conversion device 102 at a low speed. When there is no determination instruction (for example, the ON/OFF switch is set to OFF state), the abnormality determination unit 114 outputs, to the operation instruction unit 115, a signal representing that the estimated speed is within the permissible speed range (S208).

When there is a determination instruction (for example, the ON/OFF switch is set to ON-state), the abnormality determination unit 114 compares the estimated speed with a normal speed range (S205). The abnormality determination unit 114 determines whether the estimated speed is within a preset permissible speed range (S206), and outputs to the operation instruction unit 115 a signal representing that the speed is normal when the estimated speed transits into the permissible speed range (S208). When the estimated speed is not within the preset permissible speed range, the abnormality determination unit 114 determines that the speed is abnormal, and outputs a signal representing abnormality of speed to the operation instruction unit 115 (S207).

FIG. 3 shows general characteristic diagrams on slip and torque, and slip and primary current. FIG. 3(A) is a diagram showing a general characteristic representing the relationships between speed and torque and between speed and primary current in a general AC motor when the AC motor operates at a rated speed. In FIG. 3(A), the abscissa axis represents the speed, and the direction to the left corresponds to a power running side at which slip increases as shifting to the left side, that is, the direction in which the rotational speed decreases, and the direction to the right corresponds to a regeneration side at which slip inversely increases as shifting to the right side, that is, the direction in which the rotational speed increases. With respect to the general AC motor, the primary current increases irrespective of the signs of plus and minus as the slip increases. Furthermore, with respect to the AC motor, since a magnetic flux is generated inside the AC motor, current corresponding to no-load current flows in the AC motor even when the torque is equal to zero. When the AC motor exceeds the maximum torque, slip increases and the rotation is stopped. However, a stable region for use of the AC motor is generally used within a rated torque which is set at a lower torque side than the maximum torque. The current of the AC motor is generally set so that current equivalent to the rated current flows under the rated torque. That is, the speed of a generally used range of AC motors can be excellently calculated by the following [MATH. 1].

[MATH. 1]

$$F_{motor} = F_{sync} - (F_{base} - F_{rated}) \times \frac{I_1}{I_{rated}}$$

Here, $F_{motor}$ represents the estimated speed under a power running load of the AC motor, $F_{sync}$ represents the synchronous speed of the output current, $F_{base}$ represents the synchronous rotational speed equivalent to the base frequency, $F_{rated}$ represents the rated speed, $I_{rated}$ represents the rated current and $I_1$ represents the primary current.

Normally, the rated speed $F_{rated}$ and the rated current $I_{rated}$ can be acquired from the nameplate of the AC motor.

Since the synchronous speed $F_{sync}$ of the output current and the synchronous rotational speed $F_{base}$ equivalent to the base frequency are generally acquired in terms of the synchronous frequency $f_{sync}$ and the base frequency $f_{base}$, the speed can be calculated according to the following [MATH. 2] by using the number of poles acquirable from the nameplate of the motor.

[MATH. 2]

$$F = 120 \times \frac{f}{p}$$

Here, F represents the synchronous rotational speed, f represents the frequency and p represents the number of poles.

FIG. 3(B-1) is a diagram showing the comparison between the estimated speed calculated with [MATH. 1] and the actual speed, and excellent estimation can be achieved in operating ranges which exclude the neighborhood of the no-load portion and are surrounded by dotted lines. Furthermore, since abnormality of speed is determined based on whether the estimated speed deviates from a predetermined range or not, the speed error under no-load can be permitted.

FIG. 3(B-2) shows a situation that the no-load current of the AC motor is preset in the storage unit 113 as in the case of the rated current, etc., and the speed computation unit 111 estimates the speed under no-load with higher precision. The estimated speed of FIG. 3(B-2) can be calculated according to the following [MATH. 3] obtained by deforming [MATH. 1].

[MATH. 3]

$$F_{motor} = F_{sync} - (F_{base} - F_{rated}) \times \frac{I_1 - I_0}{I_{rated} - I_0}$$

Here, $I_0$ represents the no-load current. In general, the no-load current $I_0$ has a value lower than the rated current, and it may be predetermined and set, for example, such that 30% of the rated current is preset as a general representative value. When the primary current $I_1$ is equal to or less than the no-load current, it is insufficient to establish a main magnetic flux required to achieve rotational force, and thus the speed decreases. Therefore, by taking the absolute value of $I_1$-$I_0$, the speed deviation is increased in [MATH. 3].

Since the speed computation unit 111 estimates the speed by using the above calculation expression, it can be excellently estimated from the synchronous speed that a speed deviation occurs irrespective of slipping to the speed-decreasing direction or slipping to the speed-increasing direction.

FIG. 4 is a schematic diagram showing the current and period used for the speed estimation in the embodiment 1. FIG. 4 shows an example in which the output current of W-phase output from the power conversion device is detected, and shows the current and period used for the speed estimation. FIG. 4 shows a state that peak current is updated every half period of the current period in order to detect the peak current form one-phase current. By updating the peak current every half period of the current period as described above, the estimated speed can be acquired without imposing a load on a microcomputer, a processor, etc.

The speed computation unit 111 calculates the primary current $I_1$ used in [MATH. 1] or [MATH. 3] by the following [MATH. 4].

[MATH. 4]

$$I_1 = \frac{I_{peak}}{\sqrt{2}}$$

Here, $I_{peak}$ represents the peak current of AC current shown in FIG. 4.

The speed computation unit 111 calculates the synchronous speed $F_{sync}$ of the output current used in [MATH. 1] or [MATH. 5] by the following [MATH. 5].

[MATH. 5]

$$f_{sync} = \frac{1}{T}$$

Here, T represents the period of the output current shown in FIG. 4, and $f_{sync}$ represents the synchronous frequency.

FIG. 5 is an example of a diagram showing the variations of the estimated speed, speed range and current in the embodiment 1. FIG. 5 shows the variations of the estimated speed, permissible speed range and current when the monitoring device 104 is operated in this embodiment.

In the method of this embodiment, abnormality of speed is determined irrespective of the shift of the estimated speed to the speed-increasing side or the speed-decreasing side. Therefore, as shown in FIG. 5, two estimated speeds of the AC motor are illustrated, and a power running slip limit slipping from the synchronous speed in the speed-decreasing direction and a regeneration slip limit slipping in the speed-increasing direction are arranged at an equal interval, thereby setting a predetermined range for determining abnormality of the estimated speed. When the estimated speed is not located within the predetermined range from the instructed synchronous speed, the abnormality determination unit 114 determines that the speed of the AC motor is abnormal. FIG. 5 shows a state that when the estimated speed deviates from the predetermined range during the decrease of the speed of the AC motor 103 and thus abnormality of speed is determined, the output current is set to zero and the output of the power conversion device 102 is cut off. The safety of the operation of the AC motor 103 by the control system of the power conversion device 102 can be enhanced by cutting off the output of the power conversion device 102 when the actual speed of the AC motor 103 deviates from the permissible speed range as described above.

When performing determination of abnormality, the abnormality determination unit 114 may be configured to have such a timing characteristic as to pre-store a time predetermined arbitrarily by a user in the storage unit 113, count a time when an estimated speed is out of a predetermined range when the estimated speed deviates from the predetermined range with respect to the synchronous speed, and determine abnormality of speed when the deviation of the estimated speed continues over the time predetermined arbitrarily by the user. Accordingly, for example even when the actual speed of the AC motor 103 deviates from the permissible speed range due to noise for only a slight time in the operation control of the AC motor 103 by the control system, the operation can be continued without stopping the AC motor 103. Therefore, needless processing of stopping the power conversion device 102 can be reduced, and the accuracy of the monitoring of the AC motor 103 by the monitoring device 104 can be enhanced.

FIG. 6 is a flowchart showing the operation of estimating the number of poles in the embodiment 1. FIG. 6 is a flowchart showing the processing of estimating the number of poles from the base frequency and the rated speed when the speed computation unit 111 calculates [MATH. 2], but the number of poles is unknown.

The speed computation unit 111 fetches the base frequency $f_{base}$ and the rated speed $F_{rated}$ from the storage unit 113 (S601), and sets 2 to the number of poles p for calculation (S602). Since the number of rotations decreases as the number of poles increases, the speed computation unit 111 calculates the synchronous rotational speed equivalent to the base frequency by using the set number of poles p + 2 in order to compare with a speed obtained when the number of poles is larger by the number corresponding to one round, and compares the calculated synchronous rotational speed with the rated speed $F_{rated}$ (S603). Since the rated speed of a general AC motor is a speed obtained when the synchronous rotational speed equivalent to the base frequency is multiplied by the rated power running load, the calculated synchronous rotational speed is slightly lower than the synchronous rotational speed equivalent to the base frequency. Therefore, the synchronous rotational speed equivalent to the base frequency and the rated speed $F_{rated}$ are compared with each other by using the set number of poles p. When the rated speed $F_{rated}$ is lower, the number of poles is increased by 2 to perform the comparison again (S604). When the rated speed $F_{rated}$ is higher, the present set number of poles p is set as the number of poles (S605). Through the aforementioned processing, the speed computation unit 111 can determine the number of poles according to this method even when there is no information on the number of poles.

FIG. 7 shows an example of an user interface to be displayed on a computer in the embodiment 1. In this embodiment, since the abnormality of speed is determined from the estimated speed irrespective of whether the speed deviation varies up or down, an upper limit speed and a lower limit speed which define a predetermined range for the synchronous speed are set by setting the predetermined range at the upper and lower limits. Furthermore, in this embodiment, for example, an acceleration time and a deceleration time specified by any system may be preset so that a time width which is permissible when the estimated speed is not within a predetermined range can be set. In this embodiment, since the abnormality of speed is determined irrespective of whether the estimated speed fluctuates up or down, the upper and lower limit speeds are determined to have the same interval from the synchronous speed. However, insofar as the upper and lower limit speeds have the same interval, the upper and lower limit speeds and the acceleration and deceleration times may be changed, for example, by acceleration, constant speed and deceleration, or the upper and lower limit speeds and the acceleration and deceleration times may be changed by a timing at which a signal is input to the I/O unit 112. In this embodiment, determination as to forward rotation or reverse rotation is not performed, and thus one type, that is, forward rotation is set. However, if determination as to forward rotation or reverse rotation is possible, each of the forward rotation and the reverse rotation may be independently set.

FIG. 8 is an example of a diagram showing the actual signal of the AC motor and a signal output after detection of abnormality in the embodiment 1.

In FIG. 8, the abscissa axis represents the time, and the ordinate axis represents the speed. A predetermined range is set by setting a lower limit as a power running slip limit and an upper limit as a regeneration slip limit with respect to the synchronous speed, and the estimated speed of the AC motor is represented by a heavy line. FIGS. 8(A) to 8(D) show variations of examples of different output signals in combination with determination results of the abnormality determination unit 114.

FIG. 8(A) shows a state that the output of the power conversion device 102 is cut off after the estimated speed of the AC motor reaches the regeneration slip limit and deviates from the predetermined range under deceleration operation, so that the abnormality determination unit 114 determines abnormality of speed. The abnormality determination unit 114 outputs an output instruction for an alarm A representing abnormality to the I/O unit 112, and continues to output the output instruction for the alarm A until lapse of a time which is preset in the storage unit 113 and until which the control system safely stops the operation of the AC motor 103, for example. Through this operation, the stop timing of the AC motor 103 can be notified while paying attention to the surroundings.

In FIG. 8(B), after the estimated speed reaches the regeneration slip limit and deviates from the predetermined range under the constant-speed operation of the AC motor and thus the abnormality determination unit 114 determines abnormality of speed, the abnormality determination unit 114 outputs an output instruction for an alarm B representing abnormality to the I/O unit 112, and also supplies a deceleration instruction to the operation instruction unit 115. Even after the output of the power conversion device 102 is decelerated and the synchronous speed reaches zero, the abnormality determination unit 114 continues to output the output instruction for the alarm B until lapse of a time which is preset in the storage unit 113 and until which the control system safely stops the operation of the AC motor 103, for example. Here, the determination as to the continuation of the output of the alarm B is not set at the timing at which the synchronous speed is equal to zero, but may be set at a finite value, whereby the AC motor 103 can be more safely stopped.

FIG. 8(C) shows a state that the operation is continued while the abnormality determination unit 114 outputs an output instruction for an alarm C while the estimated speed reaches the power running slip limit under acceleration operation of the AC motor and deviates from the predetermined range. FIG. 8(C) also shows a state that the abnormality determination unit 114 outputs the output instruction for the alarm C while the speed reaches the regeneration slip limit under deceleration operation and deviates from the predetermined range, and further the abnormality determination unit 114 stops the output of the output instruction for the alarm C and decelerates the AC motor 103 after the time for which the estimated speed is out of the predetermined range elapses a predetermined time. Under the state that the synchronous speed is higher than zero, the abnormality determination unit 114 outputs the output instruction for the alarm C representing abnormality to the I/O unit 112, whereby the operation of the AC motor 103 can be monitored with higher safety while suppressing stopping of the AC motor which is needless on the safety management of the operation of the AC motor 103 by the control system.

FIG. 8(D) shows a state that after the speed reaches the regeneration slip limit under the deceleration operation of the AC motor and deviates from the predetermined range and thus the abnormality determines abnormality of speed, the abnormality determination unit 114 outputs a signal to the operation instruction unit 115 so that an instruction for switching the deceleration time is supplied to the power conversion device 102, switches the determination range for abnormality of speed, and continues the deceleration operation of the AC motor. The determination range for abnormality of speed is changed, and the abnormality determination unit 114 outputs an output instruction for an alarm D representing abnormality to the I/O unit 112 under the state that the synchronous speed is higher than zero. Accordingly, when a preset range which is predetermined as a permissible speed range is unduly narrower, the predetermined range can be reset.

When the AC motor 103 is a synchronous motor, no slip occurs. Therefore, the synchronous rotational speed $F_{motor}$ can be determined by calculating the synchronous frequency from the period of current acquired in FIG. 4 by using [MATH. 5] and calculating [MATH. 2] with the calculated synchronous frequency.

As described above, the monitoring device 104 according to this embodiment can reduce the troublesome work necessary for speed estimation by estimating the actual speed based on limited information separately from the system for controlling the operation of the motor, and can estimate the actual speed by a simple method without any prescribed numerical value necessary for auto-tuning or the like. Furthermore, when the actual speed of the AC motor 103 controlled by the control system of the power conversion device 102 deviates from a safe speed range due to setting of wrong constant values to various set values such as the motor constant in the control system of the power conversion device 102 which is caused by erroneous input or malfunction of auto-tuning, the monitoring device 104 can emit an alarm, and stop the operation of the motor or decelerate the motor. Accordingly, the monitoring device 104 can monitor the operation of the AC motor 103 with high precision.

Embodiment 2 (not embodiment of the invention but an example useful for its understanding)

In this embodiment, a modification of the embodiment 1 will be described. In this embodiment, description of the parts common to the embodiment 1 is omitted, and different parts will be described in detail.

In this embodiment, the current detector 105 for detecting one-phase output current of the power conversion device 102 of FIG. 1 is replaced by a current detector 205 for detecting two-phase output current, and the current data creator 110 of FIG. 1 is replaced by a current data creator 210 for creating current data based on the two-phase output current detected by the current detector 205. The other configurations have the same functions as the configurations which have been already described and shown in FIG. 1, and the descriptions thereof are omitted.

The current detector 205 is arranged each of U-phase and W-phase through which the power conversion device 102 and the AC motor 103 are connected to each other, for example, and detects the output current of each of the phases. The phase for which the output current is detected is not limited to the U-phase and the W-phase, and the output current of any two phases out of the three phases may be detected.

The current data creator 210 performs the processing of the current data creator 110 shown in the embodiment 1 on the output current of each of the two phases input from the current detector 205, and outputs current data of the two phases to a speed computation unit 111.

In this embodiment, in addition to the acquisition of the estimated speed of the AC motor 103, the speed computation unit 111 estimates the rotation direction of the AC motor 103 based on the advance direction of the current of two phases input from the current detector 205, and outputs it to the abnormality determination unit 214. As a method of estimating the rotation direction, for example when U-phase current $I_u$ and W-phase current Iw are acquired, the speed computation unit 111 may estimate the rotation speed such that the rotation is estimated as forward rotation when the W-phase is negative at the timing when the U-phase is switched from negative to positive, and as reverse rotation when the W-phase is positive at that timing. Accordingly, different permissible speed ranges can be set at the forward rotation side and the reverse rotation side, respectively, whereby the operation of the AC motor 103 can be monitored more safely and more accurately.

As another method of determining the peak current $I_{peak}$ shown in FIG. 4 in the embodiment 1, the speed computation unit 111 can determine the peak current $I_{peak}$ by performing the conversion from two-phase current out of three axes to two-axes current in [MATH. 6] and using [MATH. 7].

[MATH. 6]

$$\begin{pmatrix} I_\alpha \\ I_\beta \end{pmatrix} = \begin{pmatrix} 1 & 0 \\ -1/\sqrt{3} & -2/\sqrt{3} \end{pmatrix} \begin{pmatrix} I_u \\ I_w \end{pmatrix}$$

Here, $I_\alpha$ represents a current value in an axial direction which is set in the same axial direction as the axial direction of $I_u$, and $I_\beta$ represents a current value in an axial direction perpendicular to the axial direction of $I_u$.

[MATH. 7]

$$I_{peak} = \sqrt{I_\alpha^2 + I_\beta^2}$$

FIG. 9 is a schematic diagram showing current and period used for speed estimation in the embodiment 2. FIG. 9 shows current of two phases (solid lines), current of one phase (dotted line) predicted from the current of the two phases and peak current calculated in the [MATH. 7]. When the current of the two phases is detected, the current data creator 210 can calculate the peak current for any phase by using [MATH. 6] and [MATH. 7], and a current period is acquired from information of two phases. Therefore, as compared with a case where only one-phase current is detected, there is an advantage that the precision and speed of the speed calculation are enhanced, and the operation of the AC motor 103 can be monitored more accurately.

The speed computation unit 111 can calculate the primary current $I_1$ by using [MATH. 4] as in the case of the embodiment 1.

As compared with the embodiment 1, the above calculation executed by the speed computation unit 111 can be performed regardless of the current period, so that there is an advantage that the detection of the primary current can be performed at higher speed, and the operation of the AC motor 103 can be monitored more safely.

The abnormality determination unit 114 receives the estimated speed and the rotation direction input from the speed computation unit 111, the preset acceleration time and deceleration time which are input from the storage 113 and different between the forward rotation and the reverse rotation, the permissible speed range, etc., determines whether the estimated speed is within a predetermined permissible speed range which is set based on the input data, and outputs a determination result representing abnormality or non-abnormality to the operation instruction unit 115.

FIG. 10 is an example of a diagram showing variations of the estimated speed and the speed range in the embodiment 2. In FIG. 10, the power running slip limit and the regeneration slip limit at the forward rotation side and the power running slip limit and the regeneration slip limit at the reverse rotation side are illustrated separately from each other. In this embodiment, as in the case of the embodiment 1, the setting is performed by using a human interface shown in FIG. 7, and the abnormality determination unit 114 determines the abnormality of speed distinguishably between the forward rotation and the reverse rotation.

As described above, in this embodiment, the operation of the AC motor 103 can be monitored more safely and more accurately additionally to the action and effect of the embodiment 1.

Embodiment 3

In this embodiment of the invention, modifications of the embodiments 1 and 2 will be described. In this embodiment, with respect to common parts to the embodiments 1 and 2, the descriptions thereof are omitted, but the same reference numerals are used. Different parts will be described in detail.

FIG. 11 is an example of a diagram showing the configuration of a power conversion device and a monitoring device in an embodiment 3. FIG. 11 shows a power conversion device 302, a monitoring device 304, an AC motor 103 and a three-phase AC power source 101.

In this embodiment, the power conversion device 302 includes a current detector 205, a DC converter 106, a smoothing capacitor 107, an AC converter 108, an output controller 309, and a voltage detector 316. Furthermore, in this embodiment, the monitoring device 304 includes a current data creator 210, a speed computation unit 311, an I/O unit 112, a storage unit 113, an abnormality determination unit 314, an operation instruction unit 115 and a voltage data creator 317.

The power conversion device 302 is configured by newly adding the power conversion device 202 of FIG. 9 with a voltage detector 316 for detecting the output voltage of the power conversion device 202.

In FIG. 11, a current detector 205 is configured to detect the output current of two phases. However, in this embodiment, the current detector 205 may be configured to detect the output current of one phase like the current detector 105 as in the case of the embodiment 1.

A voltage detector 316 comprises a voltage dividing circuit or a filter circuit, for example, and it receives an output voltage output from the AC converter 108, converts a PWM pulse voltage to an AC voltage and outputs the converted AC voltage to the voltage data creator 317 of the monitoring device 304.

A voltage data creator 317 receives an output voltage detected by the voltage detector 316 of the power conversion device 102, converts the received output voltage to voltage data, for example by multiplying the input voltage value by a circuit gain, and outputs the voltage data to the speed computation unit 311.

The speed computation unit 311 receives the voltage data output from the voltage data creator 317 and the current data output from the current data creator 210, performs acquisition of the estimated speed of the AC motor and estimation of the rotation direction, and outputs them to the abnormality determination unit 314. Furthermore, the speed computation unit 311 determines based on the acquired output current and output voltage whether the AC motor 103 suffers a power running load or a regeneration load, reflects the determination result to the estimated speed and outputs the estimated speed to the abnormality determination unit 314.

As a method of reflecting the determination result of power running and regeneration to the estimated speed, the speed computation unit 311 uses [MATH. 1] used in the embodiment 1 for calculation when the estimated speed is determined to be at the power running side, and uses the following [MATH. 8] for calculation when the estimated speed is determined to be at the regeneration side.

[MATH. 8]

$$F_{motor}{}^{*} = F_{sync} + \left( F_{base} - F_{rated} \right) \times \frac{I_1}{I_{rated}}$$

Here, $F_{motor}{}^{*}$ represents the estimated speed under regeneration load of the AC motor, $F_{sync}$ represents the synchronous speed of the output current, $F_{base}$ represents the synchronous rotational speed equivalent to the base frequency, $F_{rated}$ represents the rated speed, $I_{rated}$ represents the rated current and $F_1$ represents primary current. The [MATH. 8] is used for the calculation of slip to the positive side, that is, slip of the estimated speed in the speed-increasing direction (to the regeneration side).

The abnormality determination unit 314 receives the estimated speed, the rotation direction and the power running and regeneration determination information input from the speed computation unit 311, and the preset forward rotation and reverse rotation, the acceleration time and the deceleration time different between power running and regeneration, the permissible speed range, etc. input from the storage unit 113, determines whether the estimated speed is within the predetermined permissible speed range set based on the input data, and outputs the determination result as to abnormality or non-abnormality to the operation instruction unit 115.

FIG. 12 is an example of a vector diagram for determining power running and regeneration in the embodiment 3. FIG. 12 is a vector diagram for determining power running and regeneration in which the phase of the U-axis voltage is set as a reference of the rotational coordinate, and a reference axis of the rotational coordinate is set as a torque axis, and an axis perpendicular to the torque axis is set as an exciting axis. Even when the speed computation unit 311 does not acquire information from the output controller 309 of the power conversion device 102, the speed computation unit 311 determines power running and regeneration from the voltage phase and the current phase. It can be considered that the phase of current flowing in the AC motor 103 is delayed by 90° with respect to the voltage phase output from the power conversion device 102 when the inside of the AC motor is regarded as an inductance component.

FIG. 12(A) shows the relationship between the phases of voltage and current under forward rotation while the voltage phase is set as the torque axis and the axis delayed from the torque axis by 90° is set as the exciting axis when the AC motor 103 rotates forwards. FIG. 12(B) shows the relationship between the phases of voltage and current while the voltage phase is set as the torque axis and the axis delayed from the torque axis by 90° is set as the exciting axis when the AC motor 103 rotates reversely. In FIG. 13, the determination as to power running and regeneration is performed based on the sign of the torque current with respect to the torque axis. Furthermore, as another general method of calculating power running and regeneration, for example, the speed computation unit 311 may acquire main magnetic flux data of the AC motor from the output controller 309 of the power conversion device 102 and determine power running and regeneration while the phase of the main axis is set as the exciting axis and the torque axis is set to be perpendicular to the exciting axis.

FIG. 13 shows an example of the user interface to be displayed on the computer in the embodiment 3. According to this embodiment, since the speed deviation is determined based on the information of power running and regeneration, an upper limit speed and a lower limit speed with respect to the synchronous speed can be set to provide a predetermined range by setting an upper limit range and a lower limit range separately from each other. Furthermore, in this embodiment, for example, an acceleration time and a deceleration time specified by any system are preset to enable setting of a permissible time width. In this embodiment, for example, plural patterns associated with the information of FIG. 13 are prepared in advance, and the limit speeds of the upper and lower limit ranges, the acceleration time and the deceleration time may be changed at a signal input timing to the I/O unit 112 or according to the determination state of the information of power running and regeneration, the information of forward rotation/reverse rotation because it is possible to determine these information.

FIG. 14 is an example of a diagram showing the actual speed of the AC motor and the signal output after detection of abnormality in the embodiment 3. FIG. 14 is a diagram showing a state that the abnormality determination unit 314 detects abnormality of speed based on the estimated actual speed (estimated speed) of the AC motor and outputs a signal representing abnormality of speed to the I/O unit 112, and the operation of the power conversion device is switched by the operation instruction unit 115, and also showing the output of an abnormality signal of power running and regeneration from the I/O unit 112.

In FIG. 14, the abscissa axis represents the time while the ordinate axis represents the speed, a power running slip limit and a regeneration slip limit are set at a lower side and an upper side with respect to the synchronous speed respectively to set a permissible prescribed speed range, and the actual speed of the AC motor is represented by a heavy line. FIG. 14(C) shows a state that an example of an output signal based on the determination of power running and regeneration is output in conformity with the determination of the abnormality determination unit 314.

FIG. 14(A) shows a state that the output of the power conversion device 102 is cut off after the abnormality determination unit 314 determines abnormality of speed because the estimated speed reaches the power running slip limit under the acceleration operation of the AC motor and deviates from the predetermined prescribed range. Based on a predetermined abnormality-determining condition which is out of the range where abnormality is determined, the abnormality determination unit 314 permits a state that the speed is slipping to the regeneration side and determines abnormality when the slip to the power running side increases. With this operation, the safety in the acceleration operation of the AC motor 103 can be enhanced.

FIG. 14(B) shows a state that the output of the power conversion device 102 is cut off after the abnormality determination unit 314 determines abnormality of speed because the estimated speed reaches the regeneration slip limit under deceleration operation of the AC motor and deviates from the predetermined range. Based on a predetermined abnormality-determining condition which is out of the range where abnormality is determined, the abnormality determination unit 314 permits a state that the speed is slipping to the power running side, and determines abnormality when the slip to the regeneration side increases. With this operation, the safety in the deceleration operation of the AC motor 103 can be enhanced.

FIG. 14(C) shows a state that the abnormality determination unit 114 permits slip to the power running side because the estimated speed reaches the power running slip limit under acceleration operation of the AC motor, but the time for which the estimated speed exceeds the power running slip limit is within a predetermined time, and then determines abnormality of speed because the estimated speed reaches the regeneration slip limit under deceleration operation and has deviated from the predetermined range for a predetermined time or more. Under the state that the synchronous speed is higher than zero speed, the abnormality determination unit 114 outputs an output instruction for an alarm representing abnormality of each of power running and regeneration to the I/O unit 112. By individually setting the permissible speed ranges at the power running side and the regeneration side, the operation can be properly monitored while enhancing the safety of the operation of the AC motor 103.

FIG. 15 is an example of a diagram showing the effect of the voltage/frequency ratio on the speed and current of the AC motor in the embodiment 3. FIG. 15 shows the effect of the voltage V/frequency f ratio on the speed and current in which the slip is increased by applying a load to the AC motor 103 when the power conversion device 102 outputs some synchronous frequency to the AC motor 103.

In general V/f-constant control, when the voltage is lowered with respect to the synchronous frequency, the current contributing to the torque is lowered and thus the slip increases. In this embodiment, in order to take a slip increasing effect into consideration, the calculation expression [MATH. 1] under power running is deformed, and the effect of $V_1/f_1$ is reflected by using the following[MATH. 9].

[MATH. 9]

$$F_{motor} = F_{sync} - (F_{base} - F_{rated}) \times \frac{I_1}{I_{rated}} \times \frac{V_{rated}/f_{base}}{V_1/f_1}$$

Here, $F_{motor}$ represents the estimated speed of the AC motor under a power running load, $F_{sync}$ represents the synchronous speed of the output current, $F_{base}$ represents the synchronous rotational speed equivalent to the base frequency, $F_{rated}$ represents the rated speed, $I_{rated}$ represents the rated current, $I_1$ represents the primary current, $V_{rated}$ represents the rated voltage, $f_{base}$ represents the base frequency, $V_1$ represents the output voltage and $f_1$ represents the output frequency.

At the regeneration side, the calculation expression [MATH. 8] under regeneration is likewise deformed, and the following [MATH. 10] is used.

[MATH. 10]

$$F_{motor}^* = F_{sync} + (F_{base} - F_{rated}) \times \frac{I_1}{I_{rated}} \times \frac{V_{rated}/f_{base}}{V_1/f_1}$$

Here, $F_{motor}*$ represents the estimated speed of the AC motor under a regeneration load, $F_{sync}$ represents the synchronous speed of current, $F_{base}$ represents the synchronous rotational speed equivalent to the base frequency, $F_{rated}$ represents the rated speed, $I_{rated}$ represents the rated current, $I_1$ represents the primary current, $V_{rated}$ represents the rated voltage, $f_{base}$ represents the base frequency, $V_1$ represents the output voltage and $f_1$ represents the output frequency.

$V_1$ can be easily acquired through a calculation by changing the current of [MATH. 6], [MATH. 7], [MATH. 4] to the voltage. The speed computation unit 311 may use $V_1$, $f_1$ calculated by the output controller 309.

As described above, in addition to the action and effect of the embodiment 1 or 2, based on the output voltage of the power conversion device 302, the monitoring device 304 of this embodiment determines which one of power running and regeneration the slipping direction of the AC motor corresponds to when the actual speed is estimated, and thus the permissible speed range at each of the power running side and the regeneration side can be set. Accordingly, a more optimal predetermined range can be preset for speed abnormality, and more efficient determination of abnormality of speed can be performed.

The present invention is not limited to the aforementioned embodiment, and contains various modifications. For example, the aforementioned embodiment and examples are described in detail in order to make the present invention understandable easily, and are not necessarily limited to the configuration containing all the constituent elements described above. Furthermore, a part of the configuration of some embodiment may be replaced by a configuration of another embodiment, and the configuration of some embodiment may be added with the configuration of another embodiment. Still furthermore, with respect to a part of the configuration of each embodiment, another configuration may be added, deleted or replaced.

With respect to each of the aforementioned configurations, functions, processors, processing means, etc., a part or the whole thereof may be realized by hardware, for example, may be designed by an integrated circuit. Furthermore, a processor may interpret and execute programs for realizing the respective functions, whereby each of the aforementioned configurations, functions, etc. is realized by software. Information such as programs, tables, files, etc. for realizing the respective functions may be placed in a recording device such as a memory, a hard disc or SSD (Solid State Drive),

## EP 3 226 406 B1

or a recording medium such as an IC card, an optical disc or a magnetic disc.

Control lines and information lines which are considered to be necessary for the description are illustrated, and all control lines and information lines associated with a product are not necessarily illustrated. Actually, it may be considered that almost all configurations are mutually connected to one another.

REFERENCE SIGNS LISTS

101 ... three-phase AC voltage, 102 ... power conversion device, 103 ... AC motor, 104 ... monitoring device, 105 ... current detector, 106 ... DC converter, 107 ... smoothing capacitor, 108 ... AC converter, 109 ... output controller, 110 ... current data creator, 111 ... speed computation unit, 112 ... I/O unit, 113 ... storage unit, 114 ... abnormality determination unit, 115 ... operation instruction unit, 120 ... external device, 205 ... current detector, 210 ... current data creator, 302 ... power conversion device, 304 ... monitoring device, 311 ... speed computation unit, 314 ... abnormality determination unit, 316 ... voltage detector, 317 ... voltage data creator

**Claims**

1. A control device for controlling an AC motor, the control device comprising

   a DC converter (106) adapted to convert an AC voltage to a DC voltage;
   an intermediate circuit (107) adapted to smooth the DC voltage input from the DC converter;
   an AC converter (108) adapted to convert the DC voltage smoothed by the intermediate circuit to an AC voltage to be output to the AC motor; and
   an output controller (109; 309) adapted to control the AC converter and thus the operation of the AC motor, and
   a monitoring device (104; 304) adapted to monitor the AC motor as a safety unit independently of the control by the output controller and to provide instructions for decelerating or stopping the AC motor via an operation instruction unit (115) to the output controller, the monitoring device comprising:

       a current detection unit (110, 210) adapted to acquire current data based on output current output to the AC motor;
       a voltage detector (317) adapted to acquire voltage data based on an output voltage output to the AC motor;
       a speed computation unit (111) adapted to calculate an estimated speed of the AC motor under a power running load or an estimated speed of the AC motor under a regeneration load based on the current data acquired by the current detection unit, the voltage data acquired by the voltage detector, a predetermined rated current, a preset rated voltage, a base frequency equivalent with a synchronous rotational speed, a rated rotational speed or rated slip speed and a number of poles;
       a determination unit (114) adapted to determine based on the estimated speed of the AC motor calculated in the speed computation unit and a predetermined condition whether the estimated speed of the AC motor is within a predetermined range; and
       the operation instruction unit adapted to output an instruction for decelerating or stopping the AC motor to the output controller when the determination unit determines that the estimated speed of the AC motor is not within the predetermined range.

2. The control device according to claim 1, wherein the speed computation unit (111) is adapted to perform calculation of the estimated speed of the AC motor and estimation of a rotational direction of the AC motor by using current data of two phases acquired by the current detection unit (110, 210).

3. The control device according to claim 1, wherein the operation instruction unit (115) is adapted to output an instruction for emitting an alarm when the determination unit (114) determines that the estimated speed of the AC motor is not within the predetermined range.

4. The control device according to claim 1, wherein the speed computation unit (111) is adapted to calculate the estimated speed of the AC motor while setting the value of the rated slip speed to zero in the calculation.

5. The control device according to claim 1, wherein the speed computation unit (111) is adapted to estimate the number of poles from information of the base frequency and the rated speed, and to calculate the estimated speed by using the number of poles.

6. A control method for controlling an AC motor, comprising

a DC converting step of converting an AC voltage to a DC voltage;
an intermediate step of smoothing the DC voltage input from the DC converting step;
an AC converting step of converting the DC voltage smoothed in the intermediate step to an AC voltage to be output to the AC motor; and
an output control step of controlling the AC converting step and thus the operation of the AC motor;
wherein the control method further comprises a method for monitoring, independently of the above output control step, the AC motor and for providing instructions for decelerating or stopping the AC motor, the method comprising:

a current detecting step of acquiring current data based on output current output to the AC motor;
a voltage detecting step of acquiring voltage data based on output voltage output to the AC motor,
a speed calculating step of calculating an estimated speed of the AC motor under a power running load or an estimated speed of the AC motor under a regeneration load based on the current data acquired in the current detecting step, the voltage data acquired in the voltage detecting step, a predetermined rated current, a preset rated voltage, a base frequency equivalent with a synchronous rotational speed, a rated speed or rated slip speed and a number of poles;
a determining step of determining based on the estimated speed of the AC motor calculated in the speed calculating step and a predetermined condition whether the estimated speed of the AC motor is within a predetermined range; and
an operation instructing step of outputting an instruction for decelerating or stopping the AC motor when the estimated speed of the AC motor has been determined not to be within the predetermined range.

7. The monitoring method according to claim 6, wherein in the speed calculating step, calculation of the estimated speed of the AC motor and estimation of a rotational direction of the AC motor are performed by using acquired current data of two phases.

**Patentansprüche**

1. Steuervorrichtung zum Steuern eines Wechselstrommotors, wobei die Steuervorrichtung Folgendes umfasst:

einen Gleichspannungswandler (106), der dazu ausgelegt ist, eine Wechselspannung in eine Gleichspannung umzuwandeln;
eine Zwischenschaltung (107), die dazu ausgelegt ist, die vom Gleichspannungswandler gelieferten Gleichspannung zu glätten;
einen Wechselstromwandler (108), der dazu ausgelegt ist, die durch die Zwischenschaltung geglättete Gleichspannung in eine an den Wechselstrommotor auszugebende Wechselspannung umzuwandeln; und
eine Ausgangssteuerung (109; 309), die dazu ausgelegt ist, den Wechselstromwandler und damit den Betrieb des Wechselstrommotors zu steuern, und
eine Überwachungsvorrichtung (104; 304), die dazu ausgelegt ist,, den Wechselstrommotor als Sicherheitseinheit unabhängig von der Steuerung durch die Ausgangssteuerung zu überwachen und der Ausgangssteuerung über eine Betriebsanweisungseinheit (115) Anweisungen zum Verlangsamen oder Anhalten des Wechselstrommotors zu liefern, wobei die Überwachungsvorrichtung umfasst:

eine Stromerfassungseinheit (110, 210), die dazu ausgelegt ist, Stromdaten auf der Grundlage des an den Wechselstrommotor ausgegebenen Ausgangsstroms zu erfassen;
einen Spannungsdetektor (317), der dazu ausgelegt ist, Spannungsdaten auf der Grundlage einer an den Wechselstrommotor ausgegebenen Ausgangsspannung zu erfassen;
eine Drehzahlberechnungseinheit (111), die dazu ausgelegt ist, eine geschätzte Drehzahl des Wechselstrommotors unter einer Leistungsbetriebslast oder eine geschätzte Drehzahl des Wechselstrommotors unter einer Regenerationslast auf der Grundlage der von der Stromerfassungseinheit erfassten Stromdaten, der vom Spannungsdetektor erfassten Spannungsdaten, eines vorbestimmten Nennstroms, einer voreingestellten Nennspannung, einer mit einer Synchrondrehzahl äquivalenten Grundfrequenz, einer Nenndrehzahl oder Nennschlupfdrehzahl und einer Anzahl von Polen zu berechnen;
eine Bestimmungseinheit (114), die dazu ausgelegt ist, auf der Grundlage der geschätzten Drehzahl des Wechselstrommotors, die in der Drehzahlberechnungseinheit berechnet worden ist, und einer vorbestimmten Bedingung zu bestimmen, ob die geschätzte Drehzahl des Wechselstrommotors innerhalb eines vorbestimmten Bereichs liegt; und

die Betriebsanweisungseinheit dazu ausgelegt ist, eine Anweisung zum Verlangsamen oder Anhalten des Wechselstrommotors an die Ausgabesteuerung auszugeben, wenn die Bestimmungseinheit bestimmt, dass die geschätzte Drehzahl des Wechselstrommotors nicht innerhalb des vorbestimmten Bereichs liegt.

2. Steuervorrichtung nach Anspruch 1, wobei die Geschwindigkeitsberechnungseinheit (111) dazu ausgelegt ist, die Berechnung der geschätzten Drehzahl des Wechselstrommotors und die Schätzung der Drehrichtung des Wechselstrommotors unter Verwendung der von der Stromerfassungseinheit (110, 210) erfassten Stromdaten zweier Phasen durchzuführen.

3. Steuervorrichtung nach Anspruch 1, wobei die Betriebsanweisungseinheit (115) dazu ausgelegt ist, eine Anweisung zur Ausgabe eines Alarms auszusenden, wenn die Bestimmungseinheit (114) bestimmt, dass die geschätzte Drehzahl des Wechselstrommotors nicht innerhalb des vorbestimmten Bereichs liegt.

4. Steuervorrichtung nach Anspruch 1, wobei die Drehzahlberechnungseinheit (111) dazu ausgelegt ist, die geschätzte Drehzahl des Wechselstrommotors zu berechnen, während der Wert der Nennschlupfdrehzahl in der Berechnung auf Null gesetzt wird.

5. Steuervorrichtung nach Anspruch 1, wobei die Drehzahlberechnungseinheit (111) dazu ausgelegt ist, die Anzahl der Pole aus Informationen über die Grundfrequenz und die Nenndrehzahl zu schätzen und die geschätzte Drehzahl unter Verwendung der Anzahl der Pole zu berechnen.

6. Steuerverfahren zum Steuern eines Wechselstrommotors, umfassend

einen Gleichstromumwandlungsschritt zum Umwandeln einer Wechselspannung in eine Gleichspannung;
einen Zwischenschritt zum Glätten der aus dem Gleichspannungsumwandlungsschritt eingegangenen Gleichspannung;
einen Wechselstromumwandlungsschritt zum Umwandeln der im Zwischenschritt geglätteten Gleichspannung in eine Wechselspannung, die an den Wechselstrommotor auszugeben ist; und
einen Ausgangssteuerungsschritt zum Steuern des Wechselstromumwandlungsschritts und damit des Betriebs des Wechselstrommotors;
wobei das Steuerverfahren ferner ein Verfahren zum Überwachen des Wechselstrommotors unabhängig vom obigen Ausgangssteuerungsschritt und zum Bereitstellen von Anweisungen zum Verlangsamen oder Anhalten des Wechselstrommotors umfasst, wobei das Verfahren umfasst:

einen Stromerfassungsschritt zum Erfassen von Stromdaten auf der Grundlage des an den Wechselstrommotor ausgegebenen Ausgangsstroms;
einen Spannungserfassungsschritt zum Erfassen von Spannungsdaten auf der Grundlage der an den Wechselstrommotor ausgegebenen Ausgangsspannung,
einen Drehzahlberechnungsschritt zum Berechnen einer geschätzten Drehzahl des Wechselstrommotors unter einer Leistungsbetriebslast oder einer geschätzten Drehzahl des Wechselstrommotors unter einer Regenerationslast auf der Grundlage der im Stromerfassungsschritt erfassten Stromdaten, der im Spannungserfassungsschritt erfassten Spannungsdaten, eines vorbestimmten Nennstroms, einer voreingestellten Nennspannung, einer mit einer Synchrondrehzahl äquivalenten Grundfrequenz, einer Nenndrehzahl oder Nennschlupfdrehzahl und einer Anzahl von Polen;

einen Bestimmungsschritt zum Bestimmen auf der Grundlage der im Drehzahlberechnungsschritt berechneten geschätzten Drehzahl des Wechselstrommotors und einer vorbestimmten Bedingung, ob die geschätzte Drehzahl des Wechselstrommotors innerhalb eines vorbestimmten Bereichs liegt; und
einen Betriebsanweisungsschritt zum Ausgeben einer Anweisung zum Verlangsamen oder Anhalten des Wechselstrommotors, wenn bestimmt wurde, dass die geschätzte Drehzahl des Wechselstrommotors nicht innerhalb des vorgegebenen Bereichs liegt.

7. Überwachungsverfahren nach Anspruch 6, wobei im Drehzahlberechnungsschritt die Berechnung der geschätzten Drehzahl des Wechselstrommotors und die Schätzung der Drehrichtung des Wechselstrommotors unter Verwendung der erfassten Stromdaten zweier Phasen durchgeführt werden.

**Revendications**

1.  Dispositif de commande pour commander un moteur à CA, le dispositif de commande comprenant

    un convertisseur CC (106) adapté à convertir une tension CA en une tension CC ;
    un circuit intermédiaire (107) adapté à lisser la tension CC entrée depuis le convertisseur CC ;
    un convertisseur CA (108) adapté à convertir la tension CC lissée par le circuit intermédiaire en une tension CA à délivrer en sortie au moteur à CA ; et
    un contrôleur de sortie (109 ; 309) adapté à commander le convertisseur CA et ainsi le fonctionnement du moteur à CA, et
    un dispositif de surveillance (104 ; 304) adapté à surveiller le moteur à CA comme une unité de sécurité indépendamment de la commande par le contrôleur de sortie et à fournir des instructions pour décélérer ou arrêter le moteur à CA par l'intermédiaire d'une unité d'instruction d'opération (115) au contrôleur de sortie, le dispositif de surveillance comprenant :

    une unité de détection de courant (110, 210) adaptée à acquérir des données de courant sur la base d'un courant de sortie délivré en sortie jusqu'au moteur à CA ;
    un détecteur de tension (317) adapté à acquérir des données de tension sur la base d'une tension de sortie délivrée en sortie jusqu'au moteur à CA ;
    une unité de calcul de vitesse (111) adaptée à calculer une vitesse estimée du moteur à CA sous une charge de fonctionnement électrique ou une vitesse estimée du moteur à CA sous une charge de régénération sur la base des données de courant acquises par l'unité de détection de courant, des données de tension acquises par le détecteur de tension, d'un courant nominal prédéterminé, d'une tension nominale prédéfinie, d'un équivalent de fréquence de base avec une vitesse de rotation synchrone, d'une vitesse de rotation nominale ou d'une vitesse de glissement nominale et d'un nombre de pôles ;
    une unité de détermination (114) adaptée à déterminer sur la base de la vitesse estimée du moteur à CA calculée dans l'unité de calcul de vitesse et d'une condition prédéterminée si la vitesse estimée du moteur à CA est à l'intérieur d'une plage prédéterminée ; et
    l'unité d'instruction d'opération adaptée à délivrer en sortie une instruction pour décélérer ou arrêter le moteur à CA au contrôleur de sortie lorsque l'unité de détermination détermine que la vitesse estimée du moteur à CA n'est pas à l'intérieur de la plage prédéterminée.

2.  Dispositif de commande selon la revendication 1, dans lequel l'unité de calcul de vitesse (111) est adaptée à exécuter un calcul de la vitesse estimée du moteur à CA et une estimation d'un sens de rotation du moteur à CA en utilisant des données de courant de deux phases acquises par l'unité de détection de courant (110, 210).

3.  Dispositif de commande selon la revendication 1, dans lequel l'unité d'instruction d'opération (115) est adaptée à délivrer en sortie une instruction pour émettre une alarme lorsque l'unité de détermination (114) détermine que la vitesse estimée du moteur à CA n'est pas à l'intérieur de la plage prédéterminée.

4.  Dispositif de commande selon la revendication 1, dans lequel l'unité de calcul de vitesse (111) est adaptée à calculer la vitesse estimée du moteur à CA tout en réglant la valeur de la vitesse de glissement nominale sur zéro dans le calcul.

5.  Dispositif de commande selon la revendication 1, dans lequel l'unité de calcul de vitesse (111) est adaptée à estimer le nombre de pôles à partir d'informations de la fréquence de base et de la vitesse nominale, et à calculer la vitesse estimée en utilisant le nombre de pôles.

6.  Procédé de commande pour commander un moteur à CA, comprenant

    une étape de conversion en CC pour convertir une tension CA en une tension CC;
    une étape intermédiaire pour lisser la tension CC entrée depuis l'étape de conversion en CC ;
    une étape de conversion en CA pour convertir la tension CC lissée à l'étape intermédiaire en une tension CA à délivrer en sortie au moteur à CA ; et
    une étape de commande de sortie pour commander l'étape de conversion en CA et ainsi le fonctionnement du moteur à CA ;
    dans lequel le procédé de commande comprend en outre un procédé pour surveiller, indépendamment de l'étape de commande de sortie ci-dessus, le moteur à CA et pour fournir des instructions pour décélérer ou arrêter le moteur à CA, le procédé comprenant :

une étape de détection de courant pour acquérir des données de courant sur la base d'un courant de sortie délivré en sortie jusqu'au moteur à CA ;

une étape de détection de tension pour acquérir des données de tension sur la base d'une tension de sortie délivrée en sortie jusqu'au moteur à CA ;

une étape de calcul de vitesse pour calculer une vitesse estimée du moteur à CA sous une charge de fonctionnement électrique ou une vitesse estimée du moteur à CA sous une charge de régénération sur la base des données de courant acquises à l'étape de détection de courant, des données de tension acquises à l'étape de détection de tension, d'un courant nominal prédéterminé, d'une tension nominale prédéfinie, d'un équivalent de fréquence de base avec une vitesse de rotation synchrone, d'une vitesse nominale ou d'une vitesse de glissement nominale et d'un nombre de pôles ;

une étape de détermination pour déterminer sur la base de la vitesse estimée du moteur à CA calculée à l'étape de calcul de vitesse et d'une condition prédéterminée si la vitesse estimée du moteur à CA est à l'intérieur d'une plage prédéterminée ; et

une étape d'instruction d'opération pour délivrer en sortie une instruction pour décélérer ou arrêter le moteur à CA lorsque la vitesse estimée du moteur à CA a été déterminée ne pas être à l'intérieur de la plage prédéterminée.

7. Procédé de surveillance selon la revendication 6, dans lequel, à l'étape de calcul de vitesse, un calcul de la vitesse estimée du moteur à CA et une estimation d'un sens de rotation du moteur à CA sont exécutés en utilisant des données de courant acquises de deux phases.

# FIG. 1

# FIG. 2

S201 — ACQUIRE SYNCHRONOUS SPEED

S202 — ACQUIRE ESTIMATED SPEED

S203 — ACQUIRE ABNORMALITY DETERMINATION INSTRUCTION

S204 — IS THERE ABNORMALITY DETERMINATION INSTRUCTION?

S205 — COMPARE SPEED RANGE

S206 — IS SPEED ABNORMAL?

S207 — OUTPUT ABNORMALITY OF SPEED

S208 — OUTPUT NORMALITY OF SPEED

# FIG. 3(A)

# FIG. 3(B-1)

# FIG. 3(B-2)

EP 3 226 406 B1

# FIG. 4

PEAK CURRENT
Ipeak

CURRENT VALUE

TIME

PERIOD T

# FIG. 5

REGENERATION
SLIP LIMIT

SYNCHRONOUS
SPEED

SPEED

ESTIMATED SPEED
OF AC MOTOR

POWER RUNNING
SLIP LIMIT

TIME

CURRENT

22

# FIG. 6

$$F_{rated} > \frac{120 \times (p+2)}{f_{base}}$$

# FIG. 7

# FIG. 8(A)

REGENERATION SLIP LIMIT

SYNCHRONOUS SPEED

SPEED

ESTIMATED SPEED

POWER RUNNING SLIP LIMIT

TIME

OUTPUT SIGNAL: ALARM A

ON

# FIG. 8(B)

REGENERATION SLIP LIMIT

SYNCHRONOUS SPEED

SPEED

ESTIMATED SPEED

POWER RUNNING SLIP LIMIT

TIME

OUTPUT SIGNAL: ALARM B

ON

# FIG. 8(C)

# FIG. 8(D)

# FIG. 9

PEAK CURRENT
Ipeak

CURRENT VALUE

TIME

PERIOD T

# FIG. 10

SPEED

REGENERATION
SLIP LIMIT
(FORWARD ROTATION)

SYNCHRONOUS SPEED
(FORWARD ROTATION)

POWER RUNNING
SLIP LIMIT
(FORWARD ROTATION)

POWER RUNNING
SLIP LIMIT
(FORWARD
ROTATION)

TIME

REGENERATION SLIP LIMIT
(REVERSE ROTATION)

SYNCHRONOUS SPEED
(REVERSE ROTATION)

EP 3 226 406 B1

# FIG. 11

# FIG. 12(A)

DIAGRAM IN WHICH VOLTAGE PHASE UNDER FORWARD
ROTATION IS SET AS TORQUE AXIS REFERENCE

TORQUE AXIS

VOLTAGE PHASE

CURRENT PHASE

POWER RUNNING

EXCITING AXIS

REGENERATION

# FIG. 12(B)

DIAGRAM IN WHICH VOLTAGE PHASE UNDER REVERSE
ROTATION IS SET AS TORQUE AXIS REFERENCE

TORQUE AXIS

VOLTAGE PHASE

POWER RUNNING

EXCITING AXIS

REGENERATION

CURRENT PHASE

# FIG. 13

SPEED

SET UPPER
LIMIT RANGE [ min-1 ]

UPPER LIMIT ROTATIONAL NUMBER
BASE ROTATIONAL NUMBER
LOWER LIMIT ROTATIONAL NUMBER

SET LOWER
LIMIT RANGE
[ min-1 ]

FORWARD ROTATION/
REVERSE ROTATION [        ]

RATED ROTATIONAL
NUMBER [ min-1 ]

BASE FREQUENCY [ Hz ]

NUMBER OF POLES [ pole ]

RATED CURRENT [ A ]

TIME

UPPER LIMIT RANGE
ACCELERATION TIME [ s ]

LOWER LIMIT RANGE
ACCELERATION TIME [ s ]

ACCELERATION
TIME [ s ]

DECELERATION
TIME [ s ]

LOWER LIMIT RANGE
DECELERATION TIME [ s ]

UPPER LIMIT RANGE
DECELERATION TIME [ s ]

EP 3 226 406 B1

# FIG. 14(A)

# FIG. 14(B)

# FIG. 14(C)

# FIG. 15

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3815113 B
- EP 2112753 A1
- US 2003065634 A1
- EP 1835612 A1
- JP 2012157155 A